# EUROPEAN PATENT APPLICATION

(11) **EP 4 636 907 A1**
(43) Date of publication of application: **22.10.2025**
(21) Application number: 25171425.9
(22) Date of filing: 17.04.2025
(51) Int. Cl.: H01M 10/613, H01M 10/617, H01M 10/647, H01M 10/6568, H01M 50/209

(54) **BATTERY PACK**

(30) Priority: 18.04.2024 KR 20240052394
(71) Applicant: SAMSUNG SDI CO., LTD., Yongin-si, Gyeonggi-do 17084 (KR)
(72) Inventor: KIM, Hyunsung, 17084 Yongin-si (KR); PARK, Jongtaek, 17084 Yongin-si (KR); KIM, Jin, 17084 Yongin-si (KR); SON, Mingon, 17084 Yongin-si (KR); AHN, Gijang, 17084 Yongin-si (KR)
(74) Representative: Marks & Clerk LLP

(57) **Abstract**

A battery pack includes battery cells capable of reducing flow resistance of cooling fluid through inlets for inflow of cooling fluid and outlets for outflow of cooling fluid, increasing driving efficiency to form a forced flow of cooling fluid due to the reduced flow resistance or a reduced pressure drop caused by the reduced flow resistance, and reducing temperature variations on different sides of the battery cells, thereby preventing local overheating.

## Description

### BACKGROUND

### 1. Field

One or more embodiments relate to a battery pack.

### 2. Description of the Related Art

Typically, secondary batteries are batteries that allow charging and discharging, unlike primary batteries that do not allow charging. Secondary batteries may be used as energy sources for mobile devices, electric vehicles, hybrid vehicles, electric bicycles, and uninterruptible power supplies may be used in the form of a single battery, depending on the type of external device to which they are applied or in the form of a pack in which multiple batteries are connected and bundled into one unit.

Small mobile devices, such as mobile phones, can operate for a certain period of time with the output and capacity of a single battery. When long-term operation or high-power operation is required, such as for larger mobile devices that consume a lot of power, such as laptops or electric or hybrid vehicles, a pack containing multiple batteries may be utilized due to the increased output and capacity. Depending on the number of built-in batteries, the output voltage or output current may be increased.

The above-described information disclosed in the technology that serves as the background of the present disclosure is only for improving understanding of the background of the present disclosure and thus may include information that does not constitute prior art.

### SUMMARY

One or more embodiments include a battery pack including a plurality of battery cells configured to reduce the flow resistance of cooling fluid through inlets for inflow of cooling fluid and outlets for outflow of cooling fluid, increasing the driving efficiency to form a forced flow of cooling fluid due to the reduced flow resistance or reduced pressure drop caused by the reduced flow resistance, and reducing the temperature variation on different sides of the battery cell, thereby preventing the local overheating.

Additional aspects will be set forth in part in the description which follows and, in part, will be apparent from the description, or may be learned by practice of the presented embodiments of the present disclosure.

According to one or more embodiments, a battery pack includes battery cells arranged in a first direction and each including first and second main surfaces which are opposite to each other in the first direction to face neighboring battery cells and first and second side surfaces which are opposite to each other in a second direction different from the first direction and are narrower than the first and second main surfaces, a housing for storing the battery cells, wherein the housing includes inlets and outlets formed in opposite first and second areas to face the first and second side surfaces of the battery cells, respectively, and cooling fluid which flows through an accommodating space of the housing from the inlets to the outlets and immerses at least a portion of each of the battery cells.

For example, the first and second main surfaces connecting an upper surface on which electrodes are located to a lower surface opposite to the upper surface may include surfaces that cover a relatively large area, and the first and second side surfaces connecting the upper surface on which electrodes are located to the lower surface opposite to the upper surface may include surfaces that cover a relatively small area.

For example, the inlets may include a pair of inlets spaced apart from each other in the first direction in a first area of the housing facing the first side surface of each of the battery cells, and the outlets may include a pair of outlets spaced apart from each other in the first direction in a second area of the housing facing the second side surface of each of the battery cells.

For example, the inlets and the outlets may be at different levels in a third direction crossing the first and second directions.

For example, the inlets and the outlets may be formed at a relatively low level and a relatively high level, respectively, in the third direction.

For example, the inlets may be at a position facing the first side surface of each of the battery cells, and the inlets may be substantially aligned in the first direction with first and second edges formed by the first side surface or may be at a location further inside than the first and second edges.

For example, the inlets may include a pair of first and second inlets facing the first side surface of the battery cell and biased toward one side and another side, respectively, in the first direction.

The first inlet biased toward one side in the first direction may be substantially aligned with a first edge formed by the first side surface and the first main surface or may be formed at a location further inside than the first edge, and the second inlet biased toward the another side in the first direction may be substantially aligned with a second edge formed by the first side surface and the second main surface or may be formed at a location further inside than the second edge.

For example, the inlets may be at a position facing the first side surface of the battery cell, and the inlets may be substantially aligned with a fifth edge formed by the first side surface and a lower surface in the third direction crossing the first and second directions or may be at a higher level than the fifth edge.

For example, the outlets may be at a position facing the second side surface of the battery cell, and the outlets may be substantially aligned in the first direction with third and fourth edges formed by the second side surface or may be at a location further inside than the third and fourth edges.

For example, the outlets may include a pair of first and second outlets facing the second side surface of the battery cell and biased toward one side and another side, respectively, in the first direction.

The first outlet biased toward one side in the first direction may be substantially aligned with the third edge formed by the second side surface and the first main surface or may be at a location further inside than the third edge, and the second outlet biased toward the another side in the first direction may be substantially aligned with the fourth edge formed by the second side surface and the second main surface or may be at a location further inside than the fourth edge.

For example, the outlets may be at a position facing the second side surface of the battery cell, and the outlets may be substantially aligned with a sixth edge formed by the second side surface and an upper surface in the third direction intersecting the first and second directions or may be at a lower level than the sixth edge.

For example, an inlet diffuser may be connected to the inlet and the inlet diffuser may be expanded to form an enlarged flow cross-sectional area from an end of the inlet toward the accommodating space of the housing.

For example, the inlets may include a pair of first and second inlets facing the first side surface of the battery cell and biased toward one side and another side, respectively, in the first direction.

The first inlet may be arranged so that a diagonal line extending from a first inlet diffuser connected to the first inlet is substantially aligned with a first edge formed by the first side surface and the first main surface, at one side in the first direction or is formed at a location further inside than the first edge, and the second inlet may be arranged so that a diagonal line extending from a second inlet diffuser connected to the second inlet is substantially aligned with a second edge formed by the first side surface and the second main surface, at the other side in the first direction, or is formed at a location further inside than the second edge.

For example, the first inlet may be further outside than a first edge formed by the first side surface and the first main surface, at one side in the first direction, and the second inlet may be further outside than a second edge formed by the first side surface and the second main surface, at the another side in the first direction.

For example, the first and second inlets may be at a higher level than the fifth edge formed by the first side surface and the lower surface in the third direction crossing the first and second directions.

For example, an outlet diffuser may be connected to the outlet and the outlet diffuser may be expanded to form an enlarged flow cross-sectional area from the end of the outlet toward the accommodating space of the housing.

For example, the outlets may include a pair of first and second outlets facing the second side surface of the battery cell and biased toward one side and another side, respectively, in the first direction.

The first outlet may be arranged so that a diagonal line extending from a first outlet diffuser connected to the first outlet is substantially aligned with a third edge formed by the second side surface and the first main surface, at one side in the first direction, or is at a location further inside than the third edge, and the second outlet may be arranged so that a diagonal line extending from a second outlet diffuser connected to the second outlet is substantially aligned with a fourth edge formed by the second side surface and the second main surface, at the other side in the first direction, or is at a location further inside than the fourth edge.

For example, the first outlet at one side in the first direction may be further outward than the third edge formed by the second side surface the first main surface, and the second outlet at the other side in the first direction may be further outward than the fourth edge formed by the first side surface and the second main surface.

For example, the cooling fluid may include an electrically insulating oil.

For example, the cooling fluid may be configured to flow inside the accommodating space and fill substantially the entire accommodating space of the housing to cover the upper surface of the battery cell corresponding to an electrode surface on which electrodes are located in the third direction crossing the first and second directions.

For example, a periphery of the battery cell may include a pair of long sides where the first and second main surfaces face each other in the first direction, and a pair of short sides where the first and second side surfaces face each other in the second direction.

The battery pack, along a periphery of the battery pack, may be formed to have a pair of long sides where first and second areas opposite to the first and second main surfaces of the battery cell face each other in the first direction, and a pair of short sides where third and fourth areas opposite to the first and second side surfaces of the battery cell face each other in the second direction.

According to one or more embodiments, a battery pack includes battery cells arranged in a first direction and each including first and second main surfaces which are opposite to each other in the first direction to face neighboring battery cells and first and second side surfaces which are opposite to each other in a second direction different from the first direction and are narrower than the first and second main surfaces, and a housing for storing the battery cells, wherein the housing includes inlets and outlets formed in opposite first and second areas to face the first and second side surfaces of the battery cells, respectively.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is an exploded perspective view of a battery pack according to some embodiments of the present disclosure;
FIG. 2 is a perspective view of a battery cell 10 shown in FIG. 1;
FIG. 3 is a diagram depicting a positional alignment relationship between a pair of inlets for inflow of cooling fluid, a first edge between a first side surface and a first main surface of a battery cell facing the pair of inlets, and a second edge between a first side surface and a second main surface of a battery cell, in the battery pack shown in FIG. 1;
FIG. 4 is a diagram depicting a positional alignment relationship between a pair of outlets for outflow of cooling fluid, a third edge between a second side surface and a first main surface of a battery cell facing the pair of outlets, and a fourth edge between a second side surface and a second main surface of a battery cell, in the battery pack shown in FIG. 1;
FIG. 5 is a diagram depicting a positional alignment relationship between a pair of inlets for inflow of cooling fluid and a fifth edge between a first side surface and a lower surface of a battery cell facing the pair of inlets, in the battery pack shown in FIG. 1;
FIG. 6 is a diagram depicting a positional alignment relationship between a pair of outlets for outflow of cooling fluid and a sixth edge between a second side surface and an upper surface of a battery cell facing the pair of outlets, in the battery pack shown in FIG. 1;
FIG. 7 is a perspective view of a battery pack showing the configuration of a comparative example in contrast to the present disclosure;
FIG. 8 is an exploded perspective view of a battery pack according to other embodiments of the present disclosure including inlet diffusers and outlet diffusers;
FIG. 9 is a diagram depicting a positional alignment relationship between a pair of inlets for inflow of cooling fluid, a first edge between a first side surface and a first main surface of a battery cell facing the pair of inlets, and a second edge between a first side surface and a second main surface of a battery cell, in the battery pack shown in FIG. 8;
FIG. 10 is a diagram depicting a positional alignment relationship between a pair of outlets for outflow of cooling fluid, a third edge between a second side surface and a first main surface of a battery cell facing the pair of outlets, and a fourth edge between a second side surface and a second main surface of a battery cell, in the battery pack shown in FIG. 8;
FIG. 11 is a diagram depicting a positional alignment relationship between a pair of inlets for inflow of cooling fluid and a fifth edge between a first side surface and a lower surface of a battery cell facing the pair of inlets, in the battery pack shown in FIG. 8;
FIG. 12 is a diagram depicting a positional alignment relationship between a pair of outlets for outflow of cooling fluid and a sixth edge between a second side surface and an upper surface of a battery cell facing the pair of outlets, in the battery pack shown in FIG. 8;
FIG. 13 is a perspective view illustrating an isobaric distribution depicting that driving efficiency for forcing the flow of cooling fluid is improved by decreasing a pressure drop in the battery pack shown in FIG. 8; and
FIG. 14 is a diagram showing that a chiller as a cooling circuit is fluidly connected to a battery pack and that a charger/discharger as an external device is electrically connected to the battery pack according to some embodiments of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to some embodiments of the present disclosure is described with reference to the drawings.

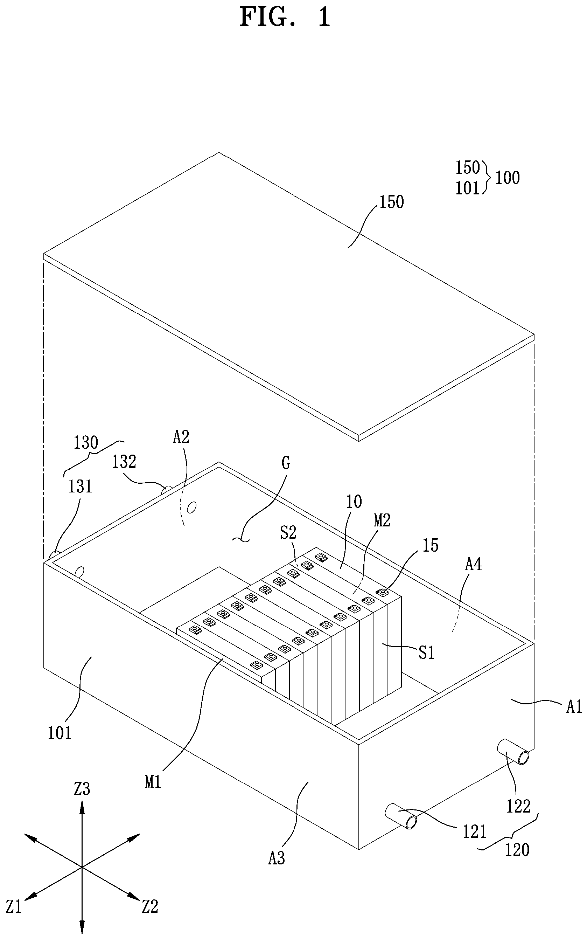

FIG. 1 is an exploded perspective view of a battery pack according to some embodiments of the present disclosure.

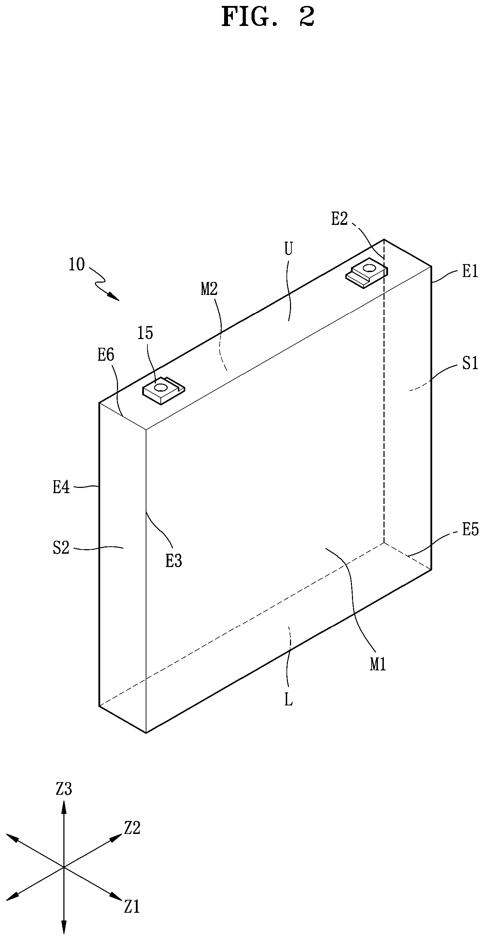

FIG. 2 is a perspective view of a battery cell 10 shown in FIG. 1.

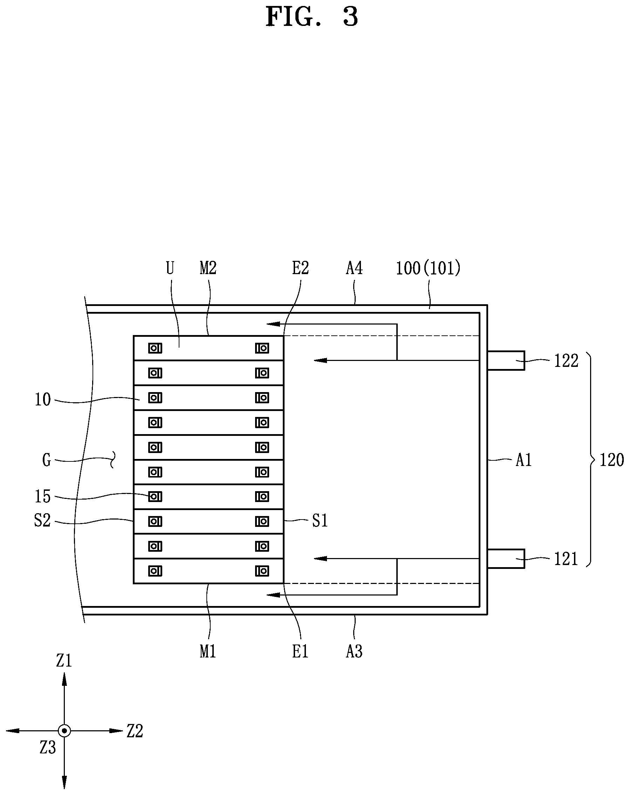

FIG. 3 is a diagram depicting a positional alignment relationship between a pair of inlets 120 for inflow of cooling fluid, a first edge E1 between a first side surface S1 and a first main surface M1 of a battery cell 10 facing the pair of inlets 120, and a second edge E2 between a first side surface S1 and a second main surface M2 of a battery cell 10, in the battery pack shown in FIG. 1.

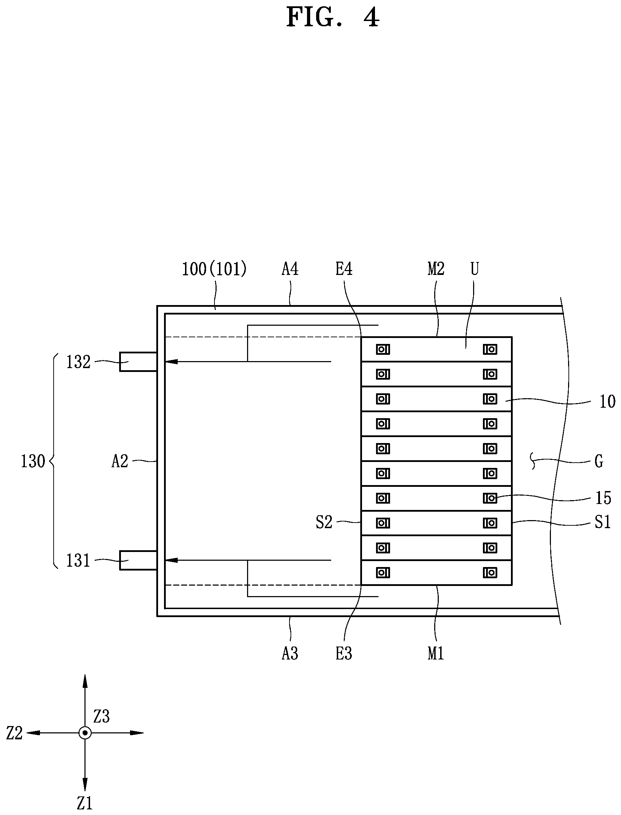

FIG. 4 is a diagram depicting a positional alignment relationship between a pair of outlets 130 for outflow of cooling fluid, a third edge E3 between a second side surface S2 and a first main surface M1 of a battery cell 10 facing the pair of outlets 130, and a fourth edge E4 between a second side surface S2 and a second main surface M2 of a battery cell 10, in the battery pack shown in FIG. 1.

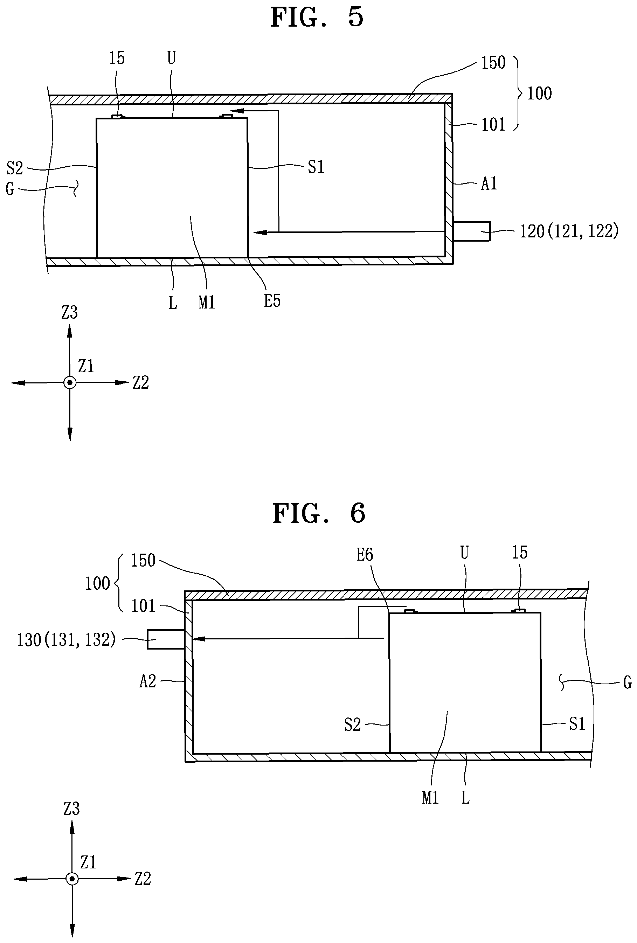

FIG. 5 is a diagram depicting a positional alignment relationship between a pair of inlets 120 for inflow of cooling fluid and a fifth edge E5 between a first side surface S1 and a lower surface L of a battery cell 10 facing the pair of inlets 120, in the battery pack shown in FIG. 1.

FIG. 6 is a diagram depicting a positional alignment relationship between a pair of outlets 130 for outflow of cooling fluid and a sixth edge E6 between a second side surface S2 and an upper surface U of a battery cell 10 facing the pair of outlets 130, in the battery pack shown in FIG. 1.

According to one or more embodiments, a battery pack includes a plurality of battery cells 10 arranged in a first direction Z1 and each including first and second main surfaces M1 and M2 which are opposite to each other in the first direction Z1 and face neighboring battery cells 10, and first and second side surfaces S1 and S2 which are opposite to each other in a second direction Z2 different from (e.g., perpendicular to) the first direction Z1 and are narrower than the first and second main surfaces M1 and M2, a housing 101 for accommodating the plurality of battery cells 10, wherein the housing 101 includes inlets 120 and outlets 130 formed in opposite first and second areas A1 and A2 to face the first and second side surfaces S1 and S2, respectively, of the battery cells 10, and cooling fluid configured to flow through an accommodating space G of the housing 101 from the inlets 120 to the outlets 130 and to immerse (or submerge) at least a portion of each of the plurality of battery cells 10.

In some embodiments of the present disclosure, the plurality of battery cells 10 may be arranged in the first direction Z1 and may be arranged so that the main surfaces M1 and M2 face each other in the first direction Z1. In one or more embodiments, the plurality of battery cells 10 may be arranged so that the main surfaces M1 and M2 of neighboring battery cells 10 face each other in the first direction Z1 corresponding to the arrangement direction. For example, according to some embodiments of the present disclosure, the plurality of battery cells 10 forming the battery pack may each include an upper surface U corresponding to an electrode surface on which first and second electrodes 15 are located, a lower surface L opposite to the upper surface U, and a pair of first and second main surfaces M1 and M2 covering a relatively large area, and a pair of first and second side surfaces S1 and S2 covering a relatively small area, which connect the upper surface U to the lower surface L thereof. The pair of first and second main surfaces M1 and M2 may face each other in the first direction Z1 in which the plurality of battery cells 10 are arranged and the pair of first and second side surfaces S1 and S2 may face each other in the second direction Z2 that crosses (e.g., is perpendicular to) the first direction Z1. The upper surface U corresponding to the electrode surface where the first and second electrodes 15 are located may face the lower surface L opposite to the upper surface U in a third direction Z3 crossing (e.g., perpendicular to) the first and second directions Z1 and Z2. For example, according to some embodiments of the present disclosure, the first and second side surfaces S1 and S2 may cover a smaller area than the first and second main surfaces M1 and M2.

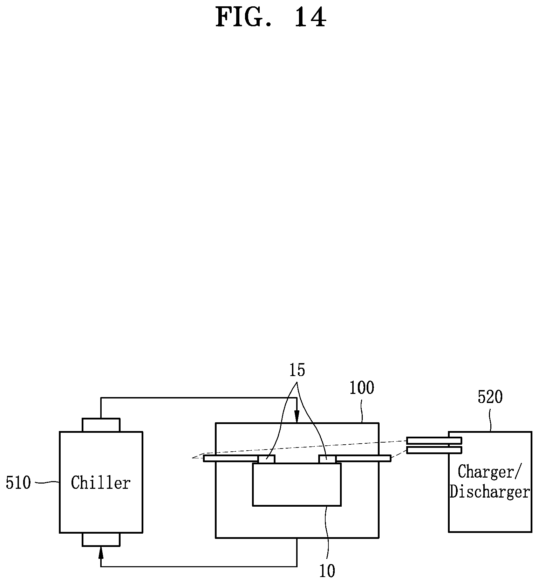

According to some embodiments of the present disclosure, the battery cells 10 may be accommodated inside the accommodating space G of the housing 101. The accommodating space G of the housing 101 may accommodate the plurality of battery cells 10 and the cooling fluid for immersing (e.g., at least partially submerging) the plurality of battery cells 10. In some embodiments of the present disclosure, the accommodating space G of the housing 101 may accommodate the flow of the cooling fluid and may form a closed-loop cooling system through a cooling circuit fluidly connected to the housing 101. In the embodiment shown in FIG. 14, the battery pack may form a fluid connection with a chiller 510 that is an external cooling circuit and may form an electrical connection with the charger/discharger 520 that is an external device. According to some embodiments of the present disclosure, the accommodating space G for accommodating the plurality of battery cells 10 may be provided in housing 101 and the accommodating space G of the housing 101 may be sealed by a cover 150. In some embodiments of the present disclosure, the housing 101 and the cover 150 assembled together may form one pack case 100.

According to some embodiments of the present disclosure, the accommodating space G of the housing 101 fluidly connected to the outside may accommodate the flow of the cooling fluid. In this regard, the housing 101 may include the inlets 120 for the inflow of the cooling fluid and the outlets 130 for the outflow of the cooling fluid. In one or more embodiments, by controlling the inflow rate through the inlets 120 and the outflow rate through the outlets 130, the inflow and outflow rates of the inlets 120 and the outlets 130 may be controlled to fill the accommodating space G of the housing 101. In one or more embodiments, in a normal state where the cooling fluid fills the accommodating space G of the housing 101 and there is no excess or deficiency of the cooling fluid, the inflow and outflow rates through the inlets 120 and outlets 130 of the housing 101 may be controlled in a balanced manner (e.g., the inflow and outflow rates may be substantially equal). According to some embodiments of the present disclosure, depending on the excess or deficiency of the cooling fluid filling the housing 101, the inflow and outflow rates through the inlets 120 and outlets 130 of the housing 101 may be differentially controlled.

According to some embodiments of the present disclosure, filling the accommodating space G in the housing 101 with the cooling fluid may refer to filling all or a part of the accommodating space G with the cooling fluid. For example, the liquid level of the cooling fluid may not reach the entire height of the housing 101. In some embodiments in which the cooling fluid fills the entire (or substantially the entire) accommodating space G in the housing 101, the liquid level of the cooling fluid corresponding to the interface between gas and liquid in different states may not be formed within the accommodating space G.

According to some embodiments of the present disclosure, the liquid level of the cooling fluid may be lower than the upper surface U of the battery cells 10, which corresponds to the electrode surface where first and second electrodes 15 are formed, to avoid the possibility of electrical interference with the electrode surface where the first and second electrodes 15 are located. According to some embodiments of the present disclosure, the cooling fluid may be an electrically insulating cooling fluid. The possibility of electrical interference between the cooling fluid and the electrode surface where the first and second electrodes 15 are formed may be avoided or prevented because the cooling fluid is an electrically insulating cooling fluid. Accordingly, in one or more embodiments, the liquid level of the insulating cooling fluid may be higher than the electrode surface.

According to some embodiments of the present disclosure, a pair of inlets 120 for the inflow of the cooling fluid and a pair of outlets 130 for the outflow of the cooling fluid may be in the housing 101. In one or more embodiments, symmetrical flows (or substantially symmetric flows) of the cooling fluid to the battery cells 10 may occur through the pair of inlets 120 and the pair of outlets 130. In one or more embodiments, the symmetrical or substantially symmetrical flows of the cooling fluid may occur within the accommodating space G of the housing 101 in the second direction Z2 in which the first and second side surfaces S1 and S2 of the battery cell 10 face each other.

According to some embodiments of the present disclosure, the inlets 120 for the inflow of the cooling fluid and the outlets 130 for the outflow of the cooling fluid may face the first and second side surfaces S1 and S2 of the battery cells 10. The inlets 120 for the inflow of the cooling fluid and the outlets 130 for the outflow of the cooling fluid may not face the main surfaces M1 and M2 that cover a relatively large area of the battery cell 10 and may face the first and second side surfaces S1 and S2 that cover a relatively small area of the battery cell 10. According to some embodiments of the present disclosure, as the inlets 120 and the outlets 130 face the first and second side surfaces S1 and S2 that cover a relatively small area of the battery cell 10, the flow resistance of the inflow flow connected to the inlets 120 (e.g., the upstream of the cooling fluid) and the outflow flow connected to the outlets 130 (e.g., the downstream of the cooling fluid) may be reduced. The driving efficiency of the fluid pump that is operated (driven) to force the flow of the cooling fluid or generate a pressure difference through the inlets 120 and the outlets 130 may be increased due to the reduced flow resistance and the reduced pressure drop caused by the reduced flow resistance.

In a comparative example in which the inlet 120 for the inflow of the cooling fluid and the outlet 130 for the outflow of the cooling fluid face the first and second main surfaces M1 and M2 that cover the largest area of the battery cell 10, compared to the present disclosure, a relatively high flow resistance or a relatively high pressure drop due to the high flow resistance may be caused in the inflow flow connected to the inlet 120 (e.g., the upstream of the cooling fluid) and the outflow flow connected to the outlet 130 (e.g., the downstream of the cooling fluid), thereby increasing the driving loss of the fluid pump driven to force the flow of the cooling fluid or generate a pressure difference through the inlet 120 and the outlet 130 and decreasing the driving efficiency thereof.

In some embodiments of the present disclosure, the inlets 120 for the inflow of the cooling fluid and the outlets 130 for the outflow of the cooling fluid may face the first and second side surfaces S1 and S2, respectively, of the battery cells 10. In one or more embodiments, the inlets 120 and outlets 130 may be formed in the first and second areas A1 and A2 of the housing 101 to face the first and second side surfaces S1 and S2, respectively, which cover a relatively small area of the battery cells 10. According to some embodiments of the present disclosure, the inlets 120 and outlets 130 may include a pair of inlets 120 and a pair of outlets 130 in the first and second areas A1 and A2 facing the first and second side surfaces S1 and S2, respectively, of the battery cells 10 and the flows of the cooling fluid may be formed symmetrically (or substantially symmetrically) around the battery cells 10 through the pair of inlets 120 and the pair of outlets 130. For example, according to some embodiments of the present disclosure, the pair of inlets 120 may form the symmetrical or substantially symmetrical flows of the cooling fluid in the second direction Z2 in which the first side surface S1 faces the second side surface S2, wherein the flows of the cooling fluid are symmetrical or substantially symmetrical in the first direction Z1 crossing (e.g., perpendicular to) the second direction Z2. According to some embodiments of the present disclosure, the flow of the cooling fluid may generally occur in the second direction Z2 where the first and second side surfaces S1 and S2 of the battery cell 10 face each other. In one or more embodiments, the flow of the cooling fluid may occur in the second direction Z2 extending from the pair of inlets 120 formed in the first area A1 of the housing 101 and facing the first side surface S1 of the battery cells 10 toward the pair of outlets 130 formed in the second area A2 of the housing 101 and facing the second side surface S2 of the battery cells 10. In one or more embodiments, the symmetrical or substantially symmetrical flows of the cooling fluid may occur in the first direction Z1 crossing the second direction Z2 on the first and second main surfaces M1 and M2 facing each other in the first direction Z1. In one or more embodiments, the flows of the cooling fluid from the pair of inlets 120 toward the pair of outlets 130, which are located in the first and second areas A1 and A2, respectively, facing each other in the second direction Z2, may occur along the first and second main surfaces M1 and M2 of the battery cells 10 in the second direction Z2 and may form the symmetrical or substantially symmetrical flows thereof on the first and second main surfaces M1 and M2 of the battery cells 10. For example, according to some embodiments of the present disclosure, forming the symmetrical or substantially symmetrical flows of the cooling fluid on the first and second main surfaces M1 and M2 of the battery cells 10 may refer to forming the symmetrical or substantially symmetrical flows of the cooling fluid that generally follow the second direction Z2 on the first and second main surfaces M1 and M2 of the battery cells 10 in the first direction Z1 intersecting the second direction Z2. According to some embodiments of the present disclosure, the flows of the cooling fluid may flow from the pair of inlets 120 in the first area A1 along the first side surface S1 of the battery cells 10 facing the first area A1 and the first and second main surfaces M1 and M2 adjacent to the first area A1. For example, according to some embodiments of the present disclosure, the first side surface S1 of the battery cells 10 may face the pair of inlets 120 formed in the first area A1 of the housing 101 facing the first side surface S1 of the battery cells 10 to receive the inflow of the cooling fluid from the pair of inlets 120. The inflow of the cooling fluid from the pair of inlets 120 received by the first side surface S1 of the battery cell 10 may branch toward the first and second main surfaces M1 and M2 of the battery cells 10, thereby forming the symmetrical or substantially symmetrical flows of the cooling fluid along the first and second main surfaces M1 and M2 of the battery cells 10. For example, according to some embodiments of the present disclosure, the cooling fluid at least partially filling the accommodating space G of the housing 101 may flow in a normal state without excess or deficiency of the cooling fluid between the inlets 120 for the inflow of the cooling fluid and the outlets 130 for the outflow of the cooling fluid. Within the inlets 120 and outlets 130, which have a relatively narrow cross-sectional area, a relatively faster flow rate may be achieved than in the accommodating space G inside the housing 101, which has a relatively larger (expanded) cross-sectional area. In this regard, in the accommodating space G of the housing 101 formed around the inlets 120 and connected to the inlets 120, a relatively high flow rate of the cooling fluid may be achieved. As such, the cooling effect of the battery cells 10 may be increased through contact with the flow of the cooling fluid at a relatively high flow rate. The accommodating space G of the housing 101, which is connected to the inlets 120 and forms the flow of the cooling fluid at a relatively high flow rate, may refer to an area facing the inlets 120. In some embodiments of the present disclosure, the positions facing the inlets 120 or the positions of the inlets 120 may be aligned (or substantially aligned) with the first edge E1 where the first side surface S1 meets the first main surface M1 in the first direction Z1 and the second edge E2 where first side surface S1 meets the second main surface M2 or may be at a location further inside than the first edge E1 and the second edge E2 in the first direction Z1. The cooling fluid that flows directly from a first inlet 121 among the pair of first and second inlets 121 and 122 to come into contact with the battery cells 10 at a relatively high flow rate may branch (or split) at the position of the first edge E1 between the first side surface S1 and the first main surface M1 which contact each other through the first edge E1, thereby achieving the balanced or substantially balanced cooling. Similarly, the cooling fluid that flows directly from the second inlet 122 to come into contact with the battery cells 10 at a relatively high flow rate may branch (or split) at the position of the second edge E2 between the first side surface S1 and the second main surface M2 which contact each other through the second edge E2, thereby achieving the balanced or substantially balanced cooling. In one or more embodiments, the first and second inlets 121 and 122 may be aligned (or substantially aligned) with the first and second edges E1 and E2 or may be located further inside than the first and second edges E1 and E2 in the first direction Z1 along which the first inlet 121 is spaced apart from the second inlet 122. The cooling fluid flowing directly from the first and second inlets 121 and 122 aligned (or substantially aligned) with the first and second edges E1 and E2 or located further inside than the first and second edges E1 and E2 may branch (or split) toward the first side surface S1 and the first and second main surfaces M1 and M2 through the positions of the first and second edges E1 and E2, respectively, thereby achieving the balanced (or substantially balanced) cooling of the first side surfaces S1 and the first and second main surfaces M1 and M2. Unlike in some embodiments of the present disclosure, if the pair of first and second inlets 121 and 122 are outside the first and second edges E1 and E2 in the first direction Z1 where the first inlet 121 is spaced apart from the second inlet 122, the cooling fluid that flows directly from the first and second inlets 121 and 122 to come into contact with the battery cells 10 at a relatively high flow rate may flow beyond the first side surfaces S1 and flow directly onto the first and second main surfaces M1 and M2, rather than flowing onto the first side surfaces S1. As the cooling effect on the first side surface S1 decreases, there is a high possibility that unbalanced cooling may occur between the first side surface S1 and the first and second main surfaces M1 and M2, due to intensive or excessive cooling on the first and second main surfaces M1 and M2. In some embodiments of the present disclosure, the flows of the cooling fluid, which flow directly through the first and second inlets 121 and 122 to come into contact with the battery cells 10 at a relatively high flow rate, may be guided onto the first side surface S1 by aligning (or substantially aligning) the first and second inlets 121 and 122 with the first and second edges E1 and E2, respectively, or locating the first and second inlets 121 and 122 between the first and second edges E1 and E2 in the first direction Z1 along which the first inlet 121 is spaced apart from the second inlet 122.

Unlike in some embodiments of the present disclosure, if the pair of first and second inlets 121 and 122 are outside the first and second edges E1 and E2, the cooling fluid with a relatively high flow rate flowing through the first and second inlets 121 and 122 may be directed directly to the first and second main surfaces M1 and M2, thereby accumulating stagnant cooling fluid on the first side surfaces S1. The stagnant cooling fluid accumulated on the first side surfaces S1 may be heated to a relatively high temperature through the heat transfer with the first side surfaces S1, which can reduce the cooling efficiency for the first side surfaces S1 and cause the local temperature variation of the battery cells 10, thereby deteriorating the charging and discharging performance of the battery cells 10.

Similar to the first and second inlets 121 and 122, the pair of first and second outlets 131 and 132 may be aligned (or substantially aligned) with the third and fourth edges E3 and E4 or may be located further inside than the third and fourth edges E3 and E4 in the first direction Z1 along which the first outlet 131 is spaced apart from the second outlet 132. For example, according to some embodiments of the present disclosure, as the flows of the cooling fluid flowing toward the first and second outlets 131 and 132 flow out through the first and second outlets 131 and 132 at a relatively high flow rate from the accommodating space G of the housing 101 with a relatively large cross-sectional area toward the first and second outlets 131 and 132 with a relatively narrow cross-sectional area, the cooling efficiency for the battery cells 10 around the first and second outlets 131 and 132 may be improved through contact with the cooling fluid at a relatively high flow rate. According to some embodiments of the present disclosure, the flows of the cooling fluid along the first and second main surfaces M1 and M2 may increase in velocity as the cooling fluid flows toward first and second outlets 131 and 132. The cooling fluid may flow in the second direction Z2 to surround the second side surface S2 and head toward the first and second outlets 131 and 132 and may flow out through the first and second outlets 131 and 132. Unlike in some embodiments of the present disclosure, if the first and second outlets 131 and 132 are further outside than the third and fourth edges E3 and E4 in the first direction Z1 along which the first outlet 131 is spaced apart from the second outlet 132, the flows of the cooling fluid flowing along the first and second main surfaces M1 and M2 may flow directly toward the first and second outlets 130, rather than surrounding the second side surface S2, thereby reducing the cooling efficiency for the second side surface S2 and causing the unbalanced cooling between the second side surface S2 and the first and second main surfaces M1 and M2. For example, as the first and second outlets 131 and 132 are outside the third and fourth edges E3 and E4 in the first direction Z1 along which the first outlet 131 is spaced apart from the second outlet 132, the flows of the cooling fluid may be generated that flow directly from the first and second main surfaces M1 and M2 toward the first and second outlets 131 and 132 and stagnant cooling fluid may accumulate on the second side surfaces S2. As the stagnant cooling fluid is heated to a high temperature through the heat transfer with the second side surface S2, the cooling efficiency for the second side surface S2 may be reduced, thereby causing the unbalanced cooling between the second side surface S2 and the first and second main surfaces M1 and M2.

In some embodiments of the present disclosure, the inlets 120 for the inflow of the cooling fluid and the outlets 130 for the outflow of the cooling fluid may face the first and second side surfaces S1 and S2, respectively, of the battery cells 10. In one or more embodiments, the inlets 120 and the outlets 130 may be in the first and second areas A1 and A2, respectively, of the housing 101 to face the first and second side surfaces S1 and S2, respectively, which cover a relatively small area of the battery cells 10. The inflow flow of the cooling fluid from the inlets 120 in the first area A1 of the housing 101 to face the first side surface S1, which covers a relatively small area of the battery cell 10, and the outflow flow of the cooling fluid toward the outlets 130 in the second area A2 of the housing 101 to face the second side surface S2, which covers a relatively small area of the battery cell 10, may reduce areas of the battery cells 10 which face the inlets 120 and the outlets 130, and thereby reduce the area of an obstacle around the inlets 120 and the outlets 130 that obstructs the inflow of the cooling fluid from the inlets 120 and the outflow of the cooling fluid toward the outlets 130.

In some embodiments of the present disclosure, as the areas of the battery cells 10 which face the inlets 120 and the outlets 130 and function as a type of an obstacle which obstructs the inflow of the cooling fluid from the inlets 120 and the outflow of the cooling fluid toward the outlets 130 are on the first and second side surfaces S1 and S2 with a relatively small area, the flow resistance of the cooling fluid may be reduced, thereby increasing the driving efficiency of the fluid pump for forcing the flow of the entire cooling fluid through the inlets 120 and outlets 130 and through the accommodating space G of the housing 101 between the inlets 120 and the outlets 130.

According to some embodiments of the present disclosure, the inlets 120 may include the pair of first and second inlets 121 and 122 facing the first side surface S1 of the battery cell 10 and biased toward one side and the other side, respectively, in the first direction Z1.

The first inlet 121 biased toward one side in the first direction Z1 may be aligned (or substantially aligned) with the first edge E1 formed by the first side surface S1 and the first main surface M1 or may be within (inside of) the first edge E1.

The second inlet 122 biased toward the other side in the first direction Z1 may be aligned (or substantially aligned) with the second edge E2 formed by the first side surface S1 and the second main surface M2 or may be within (inside of) the second edge E2.

According to some embodiments of the present disclosure, the outlets 130 may include the pair of first and second outlets 131 and 132 facing the second side surface S2 of the battery cell 10 and biased toward one side and the other side, respectively, in the first direction Z1.

The first outlet 131 biased toward one side in the first direction Z1 may be aligned (or substantially aligned) with the third edge E3 formed by the second side surface S2 and the first main surface M1 or may be within (inside of) the third edge E3.

The second outlet 132 biased toward the other side in the first direction Z1 may be aligned (or substantially aligned) with the fourth edge E4 formed by the second side surface S2 and the second main surface M2 or may be within (inside of) the fourth edge E4.

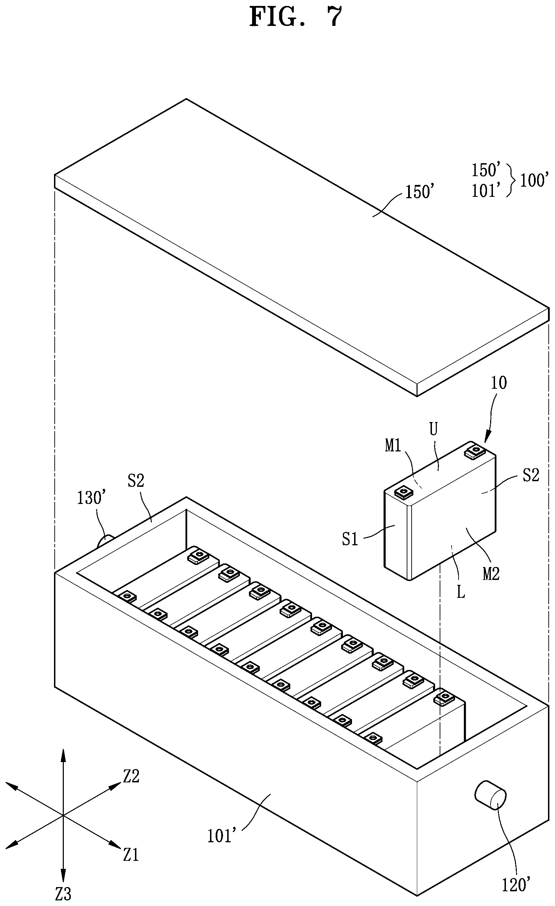

FIG. 7 is a perspective view of a battery pack showing the configuration of a comparative example in contrast to the present disclosure. Referring to FIG. 7, the battery pack may include a plurality of battery cells 10 arranged in the first direction Z1 and a housing 101' having an accommodating space for accommodating the plurality of battery cells 10. A pack case 100' including a cover 150' coupled to the housing 101' may be provided to seal the accommodating space. In the comparative example shown in FIG. 7, the plurality of battery cells 10 may be arranged in the first direction Z1 and may include a pair of main surfaces M1 and M2 facing each other in the first direction Z1. In the comparative example, as an inlet 120' for the inflow of the cooling fluid and an outlet 130' for the outflow of the cooling fluid are on the walls of the housing 101' facing the main surfaces M1 and M2, respectively, of the battery cells 10, the main surfaces M1 and M2 that cover a relatively large area may form a flow resistance against the inflow of the cooling fluid through the inlet 120' and the outflow of the cooling fluid through the outlet 130'. Due to the increased flow resistance and increased pressure drop caused by the increased flow resistance, the driving efficiency of the fluid pump for forcing the fluid flow between the inlet 120' and the outlet 130' on the walls of the housing 101 facing the main surfaces M1 and M2 of the battery cells 10 may be reduced.

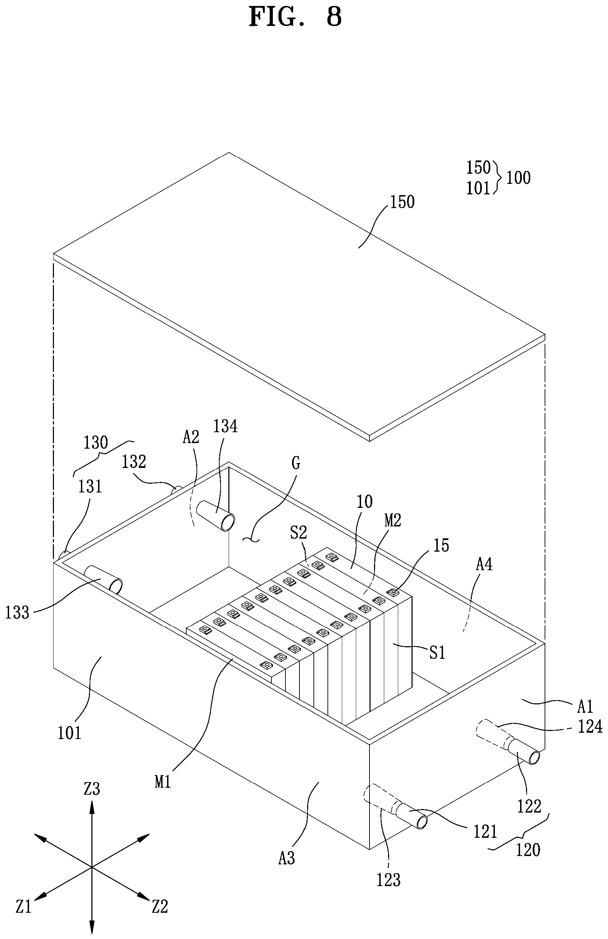

FIG. 8 is an exploded perspective view of a battery pack according to other embodiments of the present disclosure in which inlet diffusers 123 and 124 and outlet diffusers 133 and 134 are included.

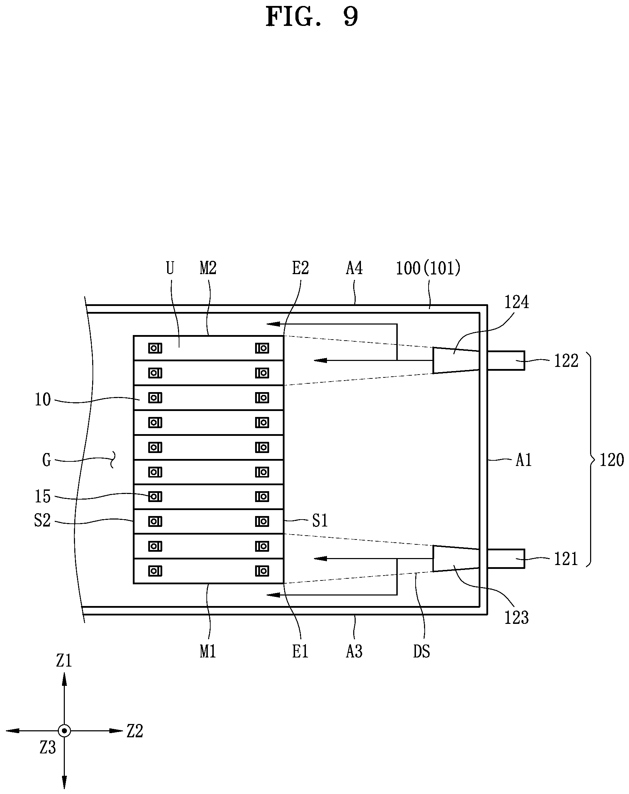

FIG. 9 is a diagram depicting a positional alignment relationship between a pair of inlets 120 for inflow of cooling fluid, a first edge E1 between a first side surface S1 and a first main surface M1 of a battery cell 10 facing the pair of inlets 120, and a second edge E2 between a first side surface S1 and a second main surface M2 of a battery cell 10, in the battery pack shown in FIG. 8.

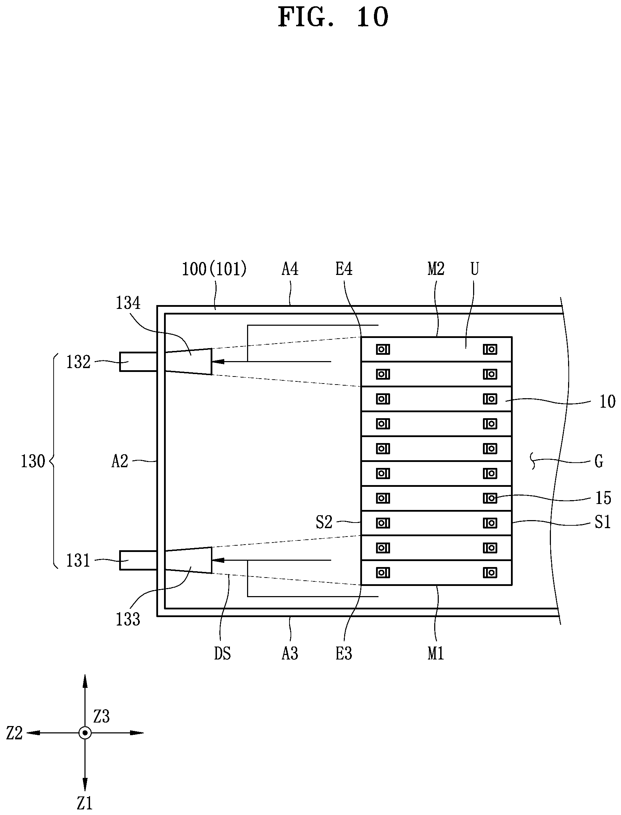

FIG. 10 is a diagram depicting a positional alignment relationship between a pair of outlets 130 for outflow of cooling fluid, a third edge E3 between a second side surface S2 and a first main surface M1 of a battery cell 10 facing the pair of outlets 130, and a fourth edge E4 between a second side surface S2 and a second main surface M2 of a battery cell 10, in the battery pack shown in FIG. 8.

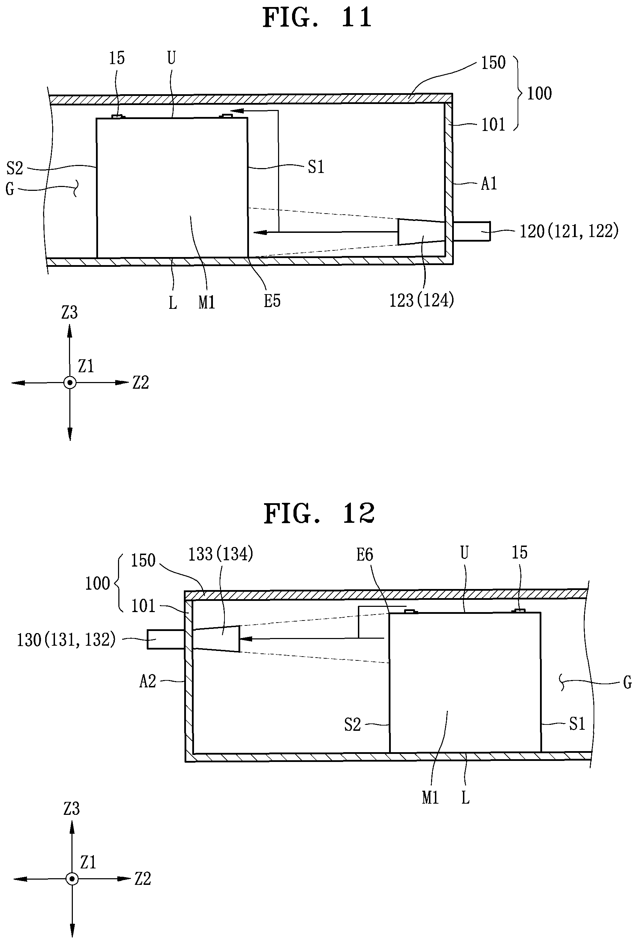

FIG. 11 is a diagram depicting a positional alignment relationship between a pair of inlets 120 for inflow of cooling fluid and a fifth edge E5 between a first side surface S1 and a lower surface L of a battery cell 10 facing the pair of inlets 120, in the battery pack shown in FIG. 8.

FIG. 12 is a diagram depicting a positional alignment relationship between a pair of outlets 130 for outflow of cooling fluid and a sixth edge E6 between a second side surface S2 and an upper surface U of a battery cell 10 facing the pair of outlets 130, in the battery pack shown in FIG. 8.

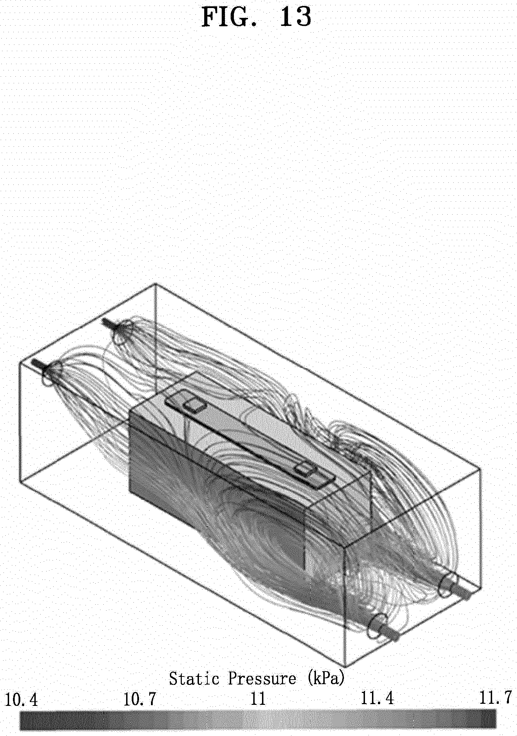

FIG. 13 is a perspective view illustrating an isobaric distribution showing that the driving efficiency for forcing the flow of cooling fluid is improved by decreasing a pressure drop in the battery pack shown in FIG. 8.

FIG. 14 is a diagram depicting a chiller as a cooling circuit is fluidly connected to a battery pack and a charger/discharger as an external device is electrically connected to the battery pack according to some embodiments of the present disclosure.

According to some embodiments of the present disclosure, inlet diffusers 123 and 124 and/or outlet diffusers 133 and 134 may be installed to at least one of the inlets 120 and outlets 130, respectively. For example, tubular diffusers (the inlet diffusers 123 and 124 and the outlet diffusers 133 and 134) extending from the ends of the inlets 120 and outlets 130 toward the accommodating space G of the housing 101 may be installed to the inlets 120 and outlets 130, respectively. According to some embodiments of the present disclosure, the inflow flow of the cooling fluid from the inlets 120 may be spread to a larger area through the inlet diffusers 123 and 124 installed at the ends of the inlets 120, thereby reducing the flow resistance. For example, the pressure drop may be decreased by reducing the pressure difference experienced by the inflow flow of the cooling fluid spread to the larger cross-sectional area through the inlet diffusers 123 and 124, thereby increasing the driving efficiency of the fluid pump to force the flow of the entire cooling fluid. Similar to the inlet diffusers 123 and 124, the outlet diffusers 133 and 134 may be installed at the ends of the outlets 130. According to some embodiments of the present disclosure, the outflow flow of the cooling fluid toward the outlets 130 may converge toward the outlets 130 from a larger area through the outlet diffusers 133 and 134 and the pressure drop may be lowered by reducing the pressure difference experienced by the outflow flow of the cooling fluid converging from the larger cross-sectional area toward the outlets 130, thereby increasing the driving efficiency of the fluid pump to force the flow of the entire cooling fluid.

According to some embodiments of the present disclosure, the diffusers 123, 124, 133, and 134 may be on at least one of the pair of first and second inlets 121 and 122 in the first area A1 of the housing 101 facing the first side surface S1 of the battery cell 10 and the pair of first and second outlets 131 and 132 in the second area A2 of the housing 101 facing the second side surface S2 of the battery cell 10. In some embodiments of the present disclosure, the diffusers (the inlet diffusers 123 and 124 and the outlet diffusers 133 and 134) may be provided on all of the first and second inlets 121 and 122 and the first and second outlets 131 and 132.

According to some embodiments of the present disclosure, the first and second inlets 121 and 122 may be aligned (or substantially aligned) with the first and second edges E1 and E2 of the battery cells 10 in the first direction Z1 along which the first inlet 121 is spaced apart from the second inlet 122 or may be at a location further inside than the first and second edges E1 and E2 of the battery cells 10. In this regard, the inflow flow of the cooling fluid from the first and second inlets 121 and 122 may branch (or split) at the first and second edges E1 and E2 between the first side surface S1 and the first and second main surfaces M1 and M2, thereby achieving the balanced (or substantially balanced) cooling for the first side surface S1 and the first and second main surfaces M1 and M2 of the battery cells 10. In some embodiments in which the inlet diffusers 123 and 124 are on the first and second inlets 121 and 122, unlike the embodiments described above, the inflow flow of the cooling fluid from the first and second inlets 121 and 122 may spread to a relatively large cross-sectional area through the inlet diffusers 123 and 124 and may branch toward the first side surface S1 and the first and second main surfaces M1 and M2 of the battery cells 10. In some embodiments in which the inlet diffusers 123 and 124 are provided, the first and second inlets 121 and 122 may not be aligned (or substantially aligned) with the first and second edges E1 and E2 of the battery cells 10 or may not be positioned between the first and second edges E1 and E2 in the first direction Z1 along which the first inlet 121 is spaced apart from the second inlet 122. For example, the first and second inlets 121 and 122 may be positioned further outside than the first and second edges E1 and E2 of the battery cells 10 in the first direction Z1 along which the first inlet 121 is spaced apart from the second inlet 122. As such, although the first and second inlets 121 and 122 are positioned further outside than the first and second edges E1 and E2 of the battery cells 10 in the first direction Z1, the inlet flow of the cooling fluid from the first and second inlets 121 and 122 may branch (or split) at the first and second edges E1 and E2 between the first side surface S1 and the first and second main surfaces M1 and M2, through the inlet diffusers 123 and 124 extending from the ends of the first and second inlets 121 and 122 with a relatively enlarged cross-sectional area toward the accommodating space G of the housing 101. Although the first and second inlets 121 and 122 are outside the first and second edges E1 and E2 in the second direction Z2 along which the first inlet 121 is spaced apart from the second inlet 122, the inlet flow of the cooling fluid may be spread to an enlarged cross-sectional area through the inlet diffusers 123 and 124 extending from the ends of the first and second inlets 121 and 122 toward the accommodating space G of the housing 101. In this regard, as the inflow flow of the cooling fluid from the first and second inlets 121 and 122 flows onto the first side surface S1, the cooling balance may be achieved between the first side surface S1 and the first and second main surfaces M1 and M2.

Similar to the first and second inlets 121 and 122, the first and second outlets 131 and 132 may be outside the third and fourth edges E3 and E4 of the battery cells 10 in the first direction Z1 along which the first outlet 131 is spaced apart from the second outlet 132. As such, to converge from the enlarged cross-sectional area toward the ends of the first and second outlets 131 and 132, the outflow flow of the cooling fluid toward the first and second outlets 131 and 132 formed outside the third and fourth edges E3 and E4 of the battery cells 10 may form an outflow of the cooling fluid converging from the enlarged area on the first and second main surfaces M1 and M2 and the second side surface S2 of the battery cells 10 toward the first and second outlets 131 and 132 through the outlet diffusers 133 and 134 extending from the ends of the first and second outlets 131 and 132 toward the accommodating space G of the housing 101 while the outflow of the cooling fluid toward the first and second outlets 131 and 132 may be joined at the third and fourth edges E3 and E4 from the first and second main surfaces M1 and M2 and the second side surface S2. The outflow of the cooling fluid from the first and second main surfaces M1 and M2 toward the first and second outlets 131 and 132 may form a flow on the second side surface S2 while surrounding the second side surface S2, thereby achieving the balanced (or substantially balanced) cooling between the second side surface S2 and the first and second main surfaces M1 and M2 of the battery cells 10.

In some embodiments in which the inlet diffusers 123 and 124 are provided, extending from the ends of the first and second inlets 121 and 122 toward the accommodating space G of the housing 101, the first and second inlets 121 and 122 may be outside the first and second edges E1 and E2 formed by the first side surface S1 of the battery cell 10 in the first direction Z1 along which the first inlet 121 is spaced apart from the second inlet 122. In one or more embodiments, the position of the first and second inlets 121 and 122 may be determined such that first and second edges E1 and E2 are aligned (or substantially aligned) with the diverging diagonal lines DS of the inlet diffusers 123 and 124 expanding from the ends of the first and second inlets 121 and 122 toward the accommodating space G of the housing 101 or are at a location inside the diverging diagonal lines DS of the inlet diffusers 123 and 124. In these embodiments, according to the position and shape design of the inlet diffusers 123 and 124, such as the position of the inlet diffusers 123 and 124 installed to the inlets 120 or the ends of the inlets 120 and the expansion angle of the inlet diffusers 123 and 124, the first and second inlets 121 and 122 may be aligned (or substantially aligned) with the first and second edges E1 and E2 of the battery cells 10 in the first direction Z1 along which the first inlet 121 is spaced apart from the second inlet 122 or may be further inside than or outside of the first and second edges E1 and E2. Unlike these embodiments, in some embodiments in which the inlet diffusers 123 and 124 expanding from the ends of the first and second inlets 121 and 122 toward the accommodating space G of the housing 101 are not provided, the first and second inlets 121 and 122 may be aligned (or substantially aligned) with the first and second edges E1 and E2 in the first direction Z1 along which the first inlet 121 is spaced apart from the second inlet 122 or may be further inside than the first and second edges E1 and E2.

In some embodiments in which the outlet diffusers 133 and 134 are provided, extending from the ends of the first and second outlets 131 and 132 toward the accommodating space G of the housing 101, the first and second outlets 131 and 132 may be outside the third and fourth edges E3 and E4 formed by the second side surface S2 of the battery cell 10 in the first direction Z1 along which the first outlet 131 is spaced apart from the second outlet 132. In one or more embodiments, the position of the first and second outlets 131 and 132 may be determined so that the third and fourth edges E3 and E4 are aligned (or substantially aligned) with the diverging diagonal lines DS of the outlet diffusers 133 and 134 expanding from the ends of the first and second outlets 131 and 132 toward the accommodating space G of the housing 101 or are further inside than the diverging diagonal lines DS of the outlet diffusers 133 and 134. In these embodiments, according to the position and shape design of the outlet diffusers 133 and 134, such as the position of the outlet diffusers 133 and 134 on the outlets 130 or the ends of the outlets 130 and the expansion angle of the outlet diffusers 133 and 134, the first and second outlets 131 and 132 may be aligned (or substantially aligned) with the third and fourth edges E3 and E4 of the battery cells 10 in the first direction Z1 along which the first outlet 131 is spaced apart from the second outlet 132 or may be further inside than or outside of the third and fourth edges E3 and E4. Unlike these embodiments, in some embodiments in which the outlet diffusers 133 and 134 expanding from the ends of the first and second outlets 131 and 132 toward the accommodating space G of the housing 101 are not provided, the first and second outlets 131 and 132 may be aligned (or substantially aligned) with the third and fourth edges E3 and E4 in the first direction Z1 along which the first outlet 131 is spaced apart from the second outlet 132 or may be further inside than the third and fourth edges E3 and E4.

According to some embodiments of the present disclosure, the inlets 120 may be aligned (or substantially aligned) with the first and second edges E1 and E2 formed by the first side surface S1 of the battery cell 10 which faces the inlets 120 in the first direction Z1 along which the pair of inlets 120 are spaced apart from each other or may be further inside than the first and second edges E1 and E2. In some embodiments in which the inlet diffusers 123 and 124 expanding from the ends of the inlets 120 toward the accommodating space G of the housing 101 are provided, the inlets 120 may be arranged such that the diverging diagonal lines DS of the inlet diffusers 123, 124 are aligned (or substantially aligned) with the first and second edges E1 and E2 at which the first side surfaces S1 meet the first main surfaces M1 and the second main surfaces M2, respectively, or the diverging diagonal lines DS of the inlet diffusers 123, 124 are inside of the first and second edges E1 and E2 along the first direction Z1.

According to some embodiments of the present disclosure, the outlets 130 may be aligned (or substantially aligned) with the third and fourth edges E3 and E4 formed by the second side surface S2 of the battery cell 10 which faces the outlets 130 in the first direction Z1 along which the pair of outlets 130 are spaced apart from each other or may be further inside than the third and fourth edges E3 and E4. In some embodiments in which the outlet diffusers 133 and 134 expanding from the ends of the outlets 130 toward the accommodating space G of the housing 101 are provided, the outlets 130 may be arranged such that the diverging diagonal lines DS of the outlet diffusers 133, 134 are aligned (or substantially aligned) with the third and fourth edges E3 and E4 at which the second side surfaces S2 meet the first main surfaces M1 and the second main surfaces M2, respectively, or the diverging diagonal lines DS of the outlet diffusers 133, 134 are inside of the third and fourth edges E3 and E4 along the first direction Z1.

According to some embodiments of the present disclosure, the inlets 120 and outlets 130 may be at different levels in the third direction Z3 that crosses (e.g., is perpendicular to) the first and second directions Z1 and Z2. For example, according to some embodiments of the present disclosure, the first direction Z1 in which the plurality of battery cells 10 are arranged may refer to a direction in which the first main surface M1 of the battery cell 10 faces the second main surface M2 thereof. According to some embodiments of the present disclosure, the second direction Z2 in which the first side surface S1 of the battery cell 10 faces the second side surface S2 thereof may refer to a direction in which the first area A1 of the housing 101 where the inlets 120 are located faces the second area A2 of the housing where the outlets 130 are located. For example, the first and second areas A1 and A2 may refer to opposite planes of the housing 101 facing the first and second side surfaces S1 and S2 of the battery cells 10, respectively. The third direction Z3 which intersects or crosses the first and second directions Z1 and Z2 may refer to, for example, a direction perpendicular to the first and second directions Z1 and Z2 and may refer to a direction in which the electrode surface where the electrodes 15 are located or the upper surface U of the battery cell 10 faces the lower surface L of the battery cell 10.

According to some embodiments of the present disclosure, the inlets 120 and the outlets 130 in first and second areas A1 and A2, respectively, may face each other in the second direction Z2 and the inlets 120 and the outlets 130 which face each other in the second direction Z2 may be formed at different levels in the third direction Z3. According to some embodiments of the present disclosure, because the inlets 120 and the outlets 130 are opposite to each other in the second direction Z2 and are offset from each other at different levels in the third direction Z3, the inlets 120 and outlets 130 may be arranged in a diagonal direction along the second and third directions Z2 and Z3. According to some embodiments of the present disclosure, the inlets 120 may be at a relatively low level in the first area A1 and the outlets 130 may be at a relatively high level in the second area A2 along the third direction Z3. As such, the inlets 120 and outlets 130 arranged in the diagonal direction along the second and third directions Z2 and Z3 may form a flow of the cooling fluid that surrounds the entire battery cells 10 within the accommodating space G of the housing 101, which increases the contact area between the cooling fluid and the battery cells 10, thereby improving the cooling efficiency of the cooling fluid. For example, the flow in the diagonal direction along the second direction Z2 and the third direction Z3 may result in an increased flow path of the cooling fluid than the flow in the second direction Z2 at the horizontal level. As the flow path of the cooling fluid increases, the heat dissipation path by the cooling fluid may also increase.

According to some embodiments of the present disclosure, with respect to the position of the inlets 120 and outlets 130 in the third direction Z3 that crosses the first and second directions Z1 and Z2, the inlets 120 and outlets 130 may be at a relatively low level and a relatively high level, respectively, in the third direction Z3. For example, according to some embodiments of the present disclosure, the inlets 120 and outlets 130 may define the position where the cooling fluid flows into the housing 101 and the position where the cooling fluid flows out of the housing 101. By forming the inlets 120 and the outlets 130 at a relatively low level and a relatively high level, respectively, in the third direction Z3, the forced flow of the cooling fluid may be formed in a direction that goes against the direction of gravity, e.g., the upward flow from the inlets 120 at a relatively low level to the outlets 130 at a relatively high level, without being affected by gravity. For example, the flow of the cooling fluid may be precisely controlled, depending on the control of the fluid pump to generate a pressure difference for the forced flow of the cooling fluid. For example, the influence of gravity, which can reduce the cooling efficiency, such as acceleration of the forced flow of the cooling fluid due to the influence of gravity, may be excluded and the controllability of the flow of the cooling fluid may be improved.

The inlets 120 may be formed at a higher level than the lower surface L of the battery cell 10. Unlike the outlets 130 to be described later, the inlets 120 may not need to be constrained by the relative positional relationship with the fifth edge E5 formed by the lower surface L and the first side surface S1 of the battery cell 10. For example, in one or more embodiments, the inlets 120 may be at a higher level than the lower surface L of the battery cell 10 and may be at a higher level than the bottom of the housing 101 where the lower surface L of the battery cell 10 touches. According to some embodiments of the present disclosure, as the battery cells 10 are accommodated in the accommodating space G of the housing 101, the lower surface L of the battery cell 10 stored in the accommodating space G of the housing 101 may be supported by the bottom of the housing 101. As the lower surface L of the battery cell 10 is in contact with the bottom of the housing 101, the entirety of the battery cells 10 may be supported by the bottom of the housing 101. In this regard, there may not be enough space to accommodate the flow of the cooling fluid between the lower surface L of the battery cell 10 and the bottom of the housing 101, which are in contact with each other. According to some embodiments of the present disclosure, the inlets 120 from which the cooling fluid flows may not be aligned with the fifth edge E5 where the first side surface S1 meets the lower surface L of the battery cell 10 in the third direction Z3 intersecting the first and second directions Z1 and Z2, e.g., the fifth edge E5 formed by the lower surface L of the battery cell 10 where the flow of the cooling fluid cannot be formed. As the inflow flow of the cooling fluid flowing from the inlets 120 is at an appropriate level for the battery cells 10 in the third direction Z3, the inlets 120 may be at a higher level than the lower surface L of the battery cell 10 to propagate the cooling of the battery cells 10 up and down in the third direction Z3.

Unlike the inlets 120, the outlets 130 may be aligned (or substantially aligned) with the sixth edge E6 formed by the upper surface U and the second side surface S2 of the battery cell 10. In one or more embodiments, the outlets 130 may be aligned (or substantially aligned) with the sixth edge E6 formed by the upper surface U and the second side surface S2 of the battery cell 10 or may be at a lower level than the sixth edge E6. For example, according to some embodiments of the present disclosure, as the outflow flow of the cooling fluid from the outlets 130 branches (or splits) between the upper surface U and the second side surface S2 of the battery cell 10, the balanced cooling between the upper surface U of the battery cell 10 and the second side surface S2 of the battery cell 10 may be achieved. To this end, the outlets 130 may be aligned with the sixth edge E6 where the upper surface U of the battery cell 10 meets the second side surface S2 of the battery cell 10 or may be at a lower level than the sixth edge E6.

As such, according to some embodiments of the present disclosure, in the first direction Z1 along which the pair of first and second inlets 121 and 122 are spaced apart from the pair of first and second outlets 131 and 132, the pair of first and second inlets 121 and 122 may be aligned (or substantially aligned) with the first and second edges E1 and E2 formed by the first side surface S1 facing the pair of first and second inlets 121 and 122, i.e., the first and second edges E1 and E2 formed on both sides of the first side surface S1 in the first direction Z1. Similarly, the pair of first and second outlets 131 and 132 may be aligned (or substantially aligned) with the third and fourth edges E3 and E4 formed by the second side surface S2 facing the pair of first and second outlets 131 and 132, i.e., the third and fourth edges E3 and E4 formed on both sides of the second side surface S2 in the first direction Z1. The positional relationship may be desired between the pair of first and second outlets 131 and 132 and the sixth edge E6 formed by the second side surface S2 and the upper surface U facing the pair of first and second outlets 131 and 132, i.e., the sixth edge E6 where the second side surface S2 meets the upper surface U of the battery cell 10. However, a separate positional alignment may not be desired or required in the positional relationship between the pair of first and second inlets 121 and 122 and the fifth edge E5 formed by the first side surface S1 facing the pair of first and second inlets 121 and 122, i.e., the fifth edge E5 where the first side surface S1 meets the lower surface L of the battery cell 10.

According to some embodiments of the present disclosure, the outlet diffusers 133 and 134 expanding from the ends of the first and second outlets 131 and 132 toward the accommodating space G of the housing 101 may be connected to the first and second outlets 131 and 132, respectively. Through the outlet diffusers 133 and 134, the inflow flow of the cooling fluid from the first and second outlets 131 and 132 may be spread to a larger cross-sectional area. In this regard, although the first and second outlets 131 and 132 are outside the sixth edge E6 in the third direction Z3, the cooling fluid flowing from the first and second outlets 131 and 132 may branch (or split) toward the second side surface S2 of the battery cell 10 and the upper surface U of the battery cell 10, thereby achieving the balanced (or substantially balanced) cooling between the second side surface S2 of the battery cell 10 and the upper surface U of the battery cell 10. To this end, the positional alignment of the outlets 130 connected to the outlet diffusers 133 and 134 may be desired in relation to the diverging diagonal lines DS of the outlet diffusers 133 and 134 extending from the ends of the outlets 130 toward the accommodating space G of the housing 101. In relation to the diverging diagonal lines DS of the outlet diffusers 133 and 134, the position of the pair of first and second outlets 131 and 132 may be determined so that the sixth edge E6 of the battery cell 10 is aligned (or substantially aligned) with the diverging diagonal lines DS of the outlet diffusers 133 and 134 or is further inside than the diverging diagonal lines DS of the outlet diffusers 133 and 134. According to some embodiments of the present disclosure, although the first and second outlets 131 and 132 are outside the sixth edge E6 of the battery cell 10 in the third direction Z3 crossing the first and second directions Z1 and Z2, depending on the position and design shape of the outlet diffusers 133 and 134, such as whether the outlet diffusers 133 and 134 are connected, the position of the outlet diffusers 133 and 134, and the expansion angle of the outlet diffusers 133 and 134, the cooling fluid may spread to a relatively large cross-sectional area through the expanding structure and may branch (or split) between the upper surface U of the battery cell 10 and the second side surface S2 of the battery cell 10, thereby achieving the balanced (or substantially balanced) cooling between the upper surface U of the battery cell 10 and the second side surface S2 of the battery cell 10.

As described above, the positional alignment may not be desired or required in the positional relationship between the first and second inlets 121 and 122 and the fifth edge E5 formed by the first side surface S1 and the lower surface L of the battery cell 10. In one or more embodiments in which the inlet diffusers 123 and 124 are connected to the ends of the first and second inlets 121 and 122, the positional relationship or positional alignment between the first and second inlets 121 and 122 and the diverging diagonal lines DS of the inlet diffusers 123 and 124 connected to the ends of the first and second inlets 121 and 122 may not be necessary because there may not be enough space between the lower surface L of the battery cell 10 and the bottom of the housing 101 for the cooling fluid to pass through and secure an appropriate flow rate for cooling, regardless of the position and expansion angle of the first and second inlets 121 and 122.

According to some embodiments of the present disclosure, the cooling fluid filling the accommodating space G of the housing 101 may have electrically insulating properties and may have a high vaporization temperature to maintain its insulating properties even at high temperatures. In one or more embodiments, an insulating cooling fluid with a high breakdown voltage may be utilized to maintain its insulating properties even at high voltages. According to some embodiments of the present disclosure, the cooling fluid may include a high-viscosity insulating oil for transformer cooling. According to some embodiments of the present disclosure, an electrical interference may not be caused even if the cooling fluid is in contact with the conductive members of the battery cell 10 within the accommodating space G of housing 101 because the cooling fluid is electrically insulating. For example, according to some embodiments of the present disclosure, although the cooling fluid contacts the upper surface U forming the electrode surface of the battery cell 10, the charging and discharging operation of the battery cell 10 may not be interrupted because an electrical interference with the battery cell 10 is not created by the electrically insulating cooling fluid.

According to some embodiments of the present disclosure, the cooling fluid may be electrically conductive and a separate insulating film (insulating coating) may be on the battery cells 10. The electrode surface (e.g., upper surface U) on which the different electrodes 15 of the battery cell 10 are formed may be at a level spaced apart from the cooling fluid by controlling the liquid level of the cooling fluid filling the housing 101. For example, by forming the liquid level of the cooling fluid filling the housing 101 to a lower level than the upper surface U corresponding to the electrode surface of the battery cell 10, electrical contact between the cooling fluid and the electrode surface of the battery cell 10 may be avoided or suppressed.

According to some embodiments of the present disclosure, the plurality of battery cells 10 may be arranged in the first direction Z1 and the plurality of battery cells 10 arranged in the first direction Z1 may be accommodated in the accommodating space G of the housing 101. For example, according to some embodiments of the present disclosure, depending on the shape and aspect ratio of each battery cell 10 and the number of battery cells 10, the shape and aspect ratio of the housing 101 in which the plurality of battery cells 10 are stored may vary. For example, according to some embodiments of the present disclosure, the first and second main surfaces M1 and M2 of the battery cells 10 may cover the largest area in the battery cell 10 and the first and second side surfaces S1 and S2 of the battery cell 10 may cover a smaller area than the first and second main surfaces M1 and M2. According to some embodiments of the present disclosure, along a periphery of the battery cell 10, the first and second main surfaces M1 and M2 of the battery cells 10 may form long sides of the battery cell 10 and the first and second side surfaces S1 and S2 of the battery cell 10 may form short sides of the battery cell 10. Through this specification, the periphery of the battery cell 10 may refer to a contour profile in a circumferential direction of the battery cell 10 in which a cross-section of the battery cell 10 is taken along the plane formed by the first and second directions Z1 and Z2 and the first and second main surfaces M1 and M2 and the first and second side surfaces S1 and S2 of battery cell 10 are a pair of long sides and a pair of short sides, respectively.

According to some embodiments of the present disclosure, the housing 101 for storing the plurality of battery cells 10 may include the first and second areas A1 and A2 opposite to each other in the second direction Z2 to face the first and second side surfaces S1 and S2, respectively, of the battery cell 10 and may include the third and fourth areas A3 and A4 opposite to each other in the first direction Z1 to face the first and second main surfaces M1 and M2, respectively, of the battery cell 10. For example, the width of the first and second areas A1 and A2 may be sufficiently sized to accommodate the thickness of the stacked first and second side surfaces S1 and S2 of the plurality of battery cells 10 arranged in the first direction Z1 and the width of the third and fourth areas A3 and A4 of the housing 101 may be sufficiently sized to accommodate the main surfaces M1 and M2 of the battery cells 10. According to some embodiments of the present disclosure, the housing 101, where the plurality of battery cells 10 are accommodated, may have the first to fourth areas A1, A2, A3, and A4 along the periphery of the housing 101. According to the shape and aspect ratio of each of the plurality of battery cells 10 stored in the housing 101 and the number of stacked battery cells 10, the housing 101 may have a rectangular shape with one of the first and second areas A1 and A2 facing each other in the second direction Z2 and the third and fourth areas A3 and A4 facing each other in the first direction Z1 as the long sides and the other as the short sides. According to some embodiments of the present disclosure, by limiting the number of stacked battery cells 10 together with the shape and aspect ratio of each of the plurality of battery cells 10 accommodated in the housing 101, the power consumption for cooling the plurality of battery cells 10 may be reduced. For example, through the circulation of the cooling fluid at a relatively low flow rate, a closed circuit with the cooling circuit connected to the battery pack may be formed outside of the battery pack and sufficient cooling performance to prevent (or at least mitigate) overheating of the battery cells 10 may be achieved.

According to some embodiments of the present disclosure, by increasing the size of the main surfaces M1 and M2 of each of the battery cells 10 forming the battery pack, the opposing areas between electrode plates of opposite polarity facing each other in each battery cell 10 may be increased, thereby improving the storage capacity of each battery cell 10. By limiting the number of stacked battery cells 10 of the battery pack, the cooling load depending on the number of stacked battery cells 10 may be reduced. As in some embodiments of the present disclosure, by reducing the flow cross-sectional area of the first and second areas A1 and A2, which face each other in the second direction Z2, the flow resistance of the cooling fluid may be reduced and the driving loss for generating the forced flow of the cooling fluid may be reduced through relatively low flow resistance.

The battery pack according to some embodiments of the present disclosure may be formed in a rectangular shape with the first and second areas A1 and A2 as shorter sides and the third and fourth areas A3 and A4 as longer sides along the periphery of the battery pack. According to some embodiments of the present disclosure, the cooling load of the battery pack for cooling the plurality of battery cells 10 may be reduced by increasing the storage capacity of each battery cell 10 through increasing the size of the main surfaces M1 and M2 of each of the battery cells 10 of the battery pack and by limiting the number of stacked battery cells 10 of the battery pack. Through this eclectic design, the overall battery pack capacity may be increased while reducing the cooling load on the battery pack. According to one or more embodiments, the housing 101 may have a roughly rectangular shape with the first and second areas A1 and A2 accommodating the stacked first and second side surfaces S1 and S2 of the battery cells 10 as short sides and the third and fourth areas A3 and A4 facing the first and second main surfaces M1 and M2 of the battery cells 10 as long sides along the periphery of the housing 101. As described above, the pair of inlets 120 for the inflow of the cooling fluid and the pair of outlets 130 for the outflow of the cooling fluid may be on the first and second areas A1 and A2 that form the short sides of the housing 101. The flow of the cooling fluid along the third and fourth areas A3 and A4 that form the long sides of the housing 101 and the flow of the cooling fluid along the first and second main surfaces M1 and M2 of the battery cells 10 may be achieved.

In some embodiments of the present disclosure, the storage capacity of each battery cell 10 may be increased by increasing the size of the first and second main surfaces M1 and M2 of each battery cell 10 forming the battery pack. The balanced (or substantially balanced) cooling of each battery cell 10 may be achieved by forming the flow of the cooling fluid flowing to a relatively large area of the first and second main surfaces M1 and M2 while increasing the storage capacity of battery cell 10. For example, the temperature distribution of the battery cells 10 may be formed uniformly (or substantially uniformly) while forming the flow of the cooling fluid flowing along the first and second main surfaces M1 and M2, which cover the largest area of the battery cell 10. For example, in contrast to the comparative example that implements cooling through the relatively narrow bottom of the battery cells 10, the present disclosure, which implements cooling through the relatively wide first and second main surfaces M1 and M2 of the battery cells 10, may achieve more effective cooling.

According to some embodiments of the present disclosure, provided is a battery pack including a plurality of battery cells capable of reducing the flow resistance of cooling fluid through inlets for inflow of cooling fluid and outlets for outflow of cooling fluid, increasing the driving efficiency to achieve a forced flow of cooling fluid due to the reduced flow resistance or a reduced pressure drop caused by the reduced flow resistance, and reducing the temperature variation on different sides of the battery cell, thereby preventing the local overheating.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a plurality of battery cells arranged in a first direction, each of the plurality of battery cells comprising first and second main surfaces opposite to each other in the first direction to face neighboring battery cells of the plurality of battery cells and first and second side surfaces are opposite to each other in a second direction different from the first direction and narrower than the first and second main surfaces;
a housing configured to accommodate the plurality of battery cells, wherein the housing comprises inlets and outlets in opposite first and second areas to face the first and second side surfaces of the plurality of battery cells; and
a cooling fluid configured to flow through an accommodating space of the housing from the inlets to the outlets and configured to immerse at least a portion of each of the plurality of battery cells.

2. The battery pack as claimed in claim 1, wherein the first and second main surfaces connect an upper surface on which electrodes are located to a lower surface opposite to the upper surface and cover a relatively large area, and
wherein the first and second side surfaces connect the upper surface on which the electrodes are located to the lower surface opposite to the upper surface and cover a relatively small area.

3. The battery pack as claimed in claim 1 or claim 2, wherein the inlets comprise a pair of inlets spaced apart from each other in the first direction in a first area of the housing facing the first side surface of each of the plurality of battery cells, and wherein the outlets comprise a pair of outlets spaced apart from each other in the first direction in a second area of the housing facing the second side surface of each of the plurality of battery cells.

4. The battery pack as claimed in any one of claims 1 to 3, wherein the inlets and the outlets are at different levels in a third direction crossing the first and second directions, optionally wherein the inlets are at a relatively low level in the third direction and the outlets are at a relatively high level in the third direction.

5. The battery pack as claimed in any one of claims 1 to 4, wherein the inlets are at a position facing the first side surface of each of the plurality of battery cells, and wherein the inlets are aligned in the first direction with first and second edges of the first side surface or are at a location further inside than the first and second edges.

6. The battery pack as claimed in any one of claims 1 to 5, wherein the inlets comprise a pair of first and second inlets facing the first side surface of each of the plurality of battery cells and biased toward one side and another side in the first direction,
wherein the first inlet biased toward the one side in the first direction is aligned with a first edge of the first side surface and the first main surface or at a location further inside than the first edge, and
wherein the second inlet biased toward the another side in the first direction is aligned with a second edge of the first side surface and the second main surface or is at a location further inside than the second edge.

7. The battery pack as claimed in any one of claims 1 to 6, wherein:
(i) the inlets face the first side surface of each of the plurality of battery cells, and wherein the inlets are aligned with a fifth edge formed by the first side surface and a lower surface in a third direction intersecting the first and second directions or are at a higher level than the fifth edge; and/or
(ii) the outlets face the second side surface of each of the plurality of battery cells, and wherein the outlets are aligned in the first direction with third and fourth edges formed by the second side surface or are at a location further inside than the third and fourth edges.

8. The battery pack as claimed in any one of claims 1 to 7, wherein the outlets comprise a pair of first and second outlets facing the second side surface of each of the plurality battery cells and biased toward one side and another side in the first direction,
wherein the first outlet is aligned with a third edge formed by the second side surface and the first main surface, at one side in the first direction, or is at a location further inside than the third edge, and
wherein the second outlet is aligned with a fourth edge formed by the second side surface and the second main surface, at the another side in the first direction, or is at a location further inside than the fourth edge.

9. The battery pack as claimed in any one of claims 1 to 8, wherein the outlets face the second side surface of each of the plurality of battery cells, and
wherein the outlets are aligned with a sixth edge formed by the second side surface and an upper surface in a third direction crossing the first and second directions or are at a lower level than the sixth edge.

10. The battery pack as claimed in any one of claims 1 to 9, further comprising an inlet diffuser connected to at least one of the inlets, wherein the inlet diffuser has an enlarged flow cross-sectional area from an end of one of the inlets toward the accommodating space of the housing.

11. The battery pack as claimed in claim 1, wherein the inlets comprise a pair of first and second inlets facing the first side surface of each of the plurality of battery cells and biased toward one side and another side in the first direction,
wherein a diagonal line extending from a first inlet diffuser connected to the first inlet is aligned with a first edge formed by the first side surface and the first main surface at the one side in the first direction or is at a location further inside than the first edge, and
wherein a diagonal line extending from a second inlet diffuser connected to the second inlet is aligned with a second edge formed by the first side surface and the second main surface at the other side in the first direction or is at a location further inside than the second edge.

12. The battery pack as claimed in claim 11, wherein:
(i) the first inlet is further outside than a first edge formed by the first side surface and the first main surface at one side in the first direction, and
wherein the second inlet is further outside than a second edge formed by the first side surface and the second main surface at the another side in the first direction; and/or
(ii) the first and second inlets are at a higher level than a fifth edge formed by the first side surface and a lower surface in a third direction crossing the first and second directions.

13. The battery pack as claimed in any one of claims 1 to 12, further comprising an outlet diffuser connected to at least one of the outlets, wherein the outlet diffuser has an enlarged flow cross-sectional area from an end of one of the outlets toward the accommodating space.

14. The battery pack as claimed in claim 1, wherein the outlets comprise a pair of first and second outlets facing the second side surface of each of the plurality of battery cells and biased toward one side and another side in the first direction,
wherein a diagonal line extending from a first outlet diffuser connected to the first outlet is aligned with a third edge formed by the second side surface and the first main surface at one side in the first direction, or is at a location further inside than the third edge, and
wherein a diagonal line extending from a second outlet diffuser connected to the second outlet is aligned with a fourth edge formed by the second side surface and the second main surface at the another side in the first direction, or is at a location further inside than the fourth edge, optionally wherein the first outlet is further outward than the third edge formed by the second side surface and the first main surface, and
wherein the second outlet is further outward than the fourth edge formed by the first side surface and the second main surface.

15. The battery pack as claimed in any one of claims 1 to 14, wherein:
(i) the cooling fluid comprises an electrically insulating oil; and/or
(ii) the cooling fluid is configured to flow inside the accommodating space of the housing and to fill substantially an entirety of the accommodating space to cover an upper surface of each of the plurality of battery cells corresponding to an electrode surface on which electrodes are located in a third direction crossing the first and second directions; and/or
(iii) a periphery of each of the plurality of battery cells has a pair of long sides where the first and second main surfaces face each other in the first direction, and a pair of short sides where the first and second side surfaces face each other in the second direction,
wherein a periphery of the battery pack has a pair of long sides where first and second areas opposite to the first and second main surfaces of each of the plurality of battery cells face each other in the first direction, and a pair of short sides where third and fourth areas opposite to the first and second side surfaces of each of the plurality of battery cells face each other in the second direction.
